# EUROPEAN PATENT APPLICATION

(11) **EP 4 167 195 A1**
(43) Date of publication of application: **19.04.2023**
(21) Application number: 21202896.3
(22) Date of filing: 15.10.2021
(51) Int. Cl.: G06V 10/94, G06V 40/16

(54) **PERSONAL DATA PROCESSING SYSTEM**

(71) Applicant: Brighter AI Technologies GmbH, 10178 Berlin (DE)
(72) Inventor: STROTTNER, Thomas, 10178 Berlin (DE); CONEYS, Sean, 10178 Berlin (DE); SUKMANOVA, Elena, 10178 Berlin (DE); YOUN, Sina, 10178 Berlin (DE); CHATTERJEE, Sreenjoy, 10245 Berlin (DE); GLÄSER, Marian, 10317 Berlin (DE)
(74) Representative: Pfenning, Meinig & Partner mbB

(57) **Abstract**

Personal data processing system comprising a first device configured to capture image data including facial image data of a human being; the first device further configured to detect the facial image data of a human being, to determine a descriptor including information describing a characteristic of a mimic expression feature and a characteristic of each identification feature of a selectable subset of the plurality of identification features; the first device further configured to provide an obfuscated image with placeholder data replacing the facial image data; the first device further configured to provide the obfuscated image and the descriptor to a second device; the second device configured to perform a replacement of the placeholder data with artificial facial image data corresponding to the descriptor to produce an anonymized image.

## Description

The present document relates to a personal data processing system, to a method of operating the personal data processing system and a use of the personal data processing system. The disclosure of the present document belongs to the field of image and video processing and is directed towards acquiring and processing visual data and being compatible with existing technical systems without conflicting with privacy requirements.

Recently, innovative technologies like, for example, autonomous driving, intelligent retailing applications or smart city analytics etc. have emerged. A common point of these and other innovative technologies is the need for large amounts of data, for example image data and video data.

A number of these innovative technologies make use of algorithms of the field of artificial intelligence and/or machine learning which may need data for training and/or validation. Examples for such algorithms, sometimes referred to as models, are, among others, artificial neural networks and/or deep neural networks, support vector machines, fuzzy methods and the like. For the training and/or validation data of such models, it may be necessary to cover a variety of data and/or application domains and/or scenarios to achieve a high or at least acceptable quality of their performance. In this context it may be required to provide training and/or validation data of a high quality, wherein high quality refers to the fulfilment of necessary requirements regarding the provided data, including requirements regarding single pieces of data and groups of data including the whole set of data. Such requirements may concern, for example, a diversity, a variety, a bias, a noise and an amount of data.

However, due to privacy requirements, for example due to a regulatory policy, in a number of situations it is not possible to process original data which may hence limit the availability of suitable data, for example for video analytics and machine learning training and/or validation. As a remedy for such cases, it may be seen as an option to anonymize data. However, conventional anonymization methods, like, for example, blurring and/or masking of personal identity information (for example facial image data) may be incompatible with the algorithms or with use cases of artificial intelligence/machine learning/analytics. As another option it may be considered to generate fully synthetic images or to augment real data. However, in this case it may be difficult to achieve the necessary variety of the training/validation data, that is, to sufficiently cover relevant real life scenarios.

A further possible option may be to anonymize image data by way of a deep natural anonymization. This is a technology of anonymization based on deep learning technology, where personal identifiers, that is features that can be used to identify a person, are replaced via generative artificial intelligence. This technology can be used to, for example, modify image data in which a face is depicted in a way such that the true identity of the person belonging to the face is obfuscated while maintaining a natural appearance of the face, which may also be modified, in the eye of an observer. It is hence impossible or at least difficult for the observer to detect that the image is modified. To maintain the natural appearance this technology allows to keep individual facial characteristics like, for example, age, gender, view angle, gaze direction, size parameters of the face and/or face elements, and the like. In a modified image the transition between a modified image region and a non-modified image region may be substantially seamless.

Articles of this field of technology are cited in the following:
A first article is, for example, Kaipeng Zhang, Zhanpeng Zhang, Zhifeng Li, Yu Qiao: Joint Face Detection and Alignment using Multi-task Cascaded Convolutional Networks. arXiv:1604.02878, cs.CV, 2016. In this article, the authors propose a deep cascaded multi-task framework which exploits the inherent correlation between them to boost up their performance. In particular, the proposed framework adopts a cascaded structure with three stages of carefully designed deep convolutional networks that predict face and landmark location in a coarse-to-fine manner. In addition, in the learning process, a new online hard sample mining strategy is proposed.

Another source of information is the article 'Jianzhu Guo, Xiangyu Zhu, Yang Yang, Fan Yang, Zhen Lei, Stan Z. Li: Towards Fast, Accurate and Stable 3D Dense Face Alignment. arXiv:2009.09960, cs.CV, 2020' and the references therein. In this article a novel regression framework named 3DDFA-V2 which makes a balance among speed, accuracy and stability is proposed.

Furthermore, information on anonymization of faces, for example deep anonymization, may be found in the article Yuval Nirkin, Yosi Keller, Tal Hassner: FSGAN: Subject Agnostic Face Swapping and Reenactment. arXiv:1908.05932v1, cs.CV, 2019. Therein, a Face Swapping GAN (FSGAN) for face swapping and reenactment is presented. FSGAN is subject agnostic and can be applied to pairs of faces without requiring training on those faces.

Further, an article concerned with anonymization based on deep learning technology is 'Håkon Hukkelås, Rudolf Mester, Frank Lindseth: DeepPrivacy: A Generative Adversarial Network for Face Anonymization. arXiv:1909.04538, cs.CV, https://dblp.org/rec/journals/corr/abs-1909-04538.bib, 2019.' Therein, a novel architecture is proposed which is able to automatically anonymize faces in images while retaining the original data distribution. A total anonymization of all faces in an image by generating images exclusively on privacy-safe information is ensured. The model of the algorithm is based on a conditional generative adversarial network, generating images considering the original pose and image background, wherein the conditional information provides highly realistic faces with a seamless transition between the generated face and the existing background.

More information can also be found in 'Tero Karras, Samuli Laine, Miika Aittala, Janne Hellsten, Jaakko Lehtinen, Timo Aila: Analyzing and Improving the Image Quality of StyleGAN. arXiv:1912.04958, cs.CV, 2019.' Therein, the authors expose and analyse several artefacts characteristic for style-based generative adversarial network architecture (StyleGAN) and propose changes in both model architecture and training methods to address them. In particular, they redesign the generator normalization, revisit progressive growing, and regularize the generator to encourage good conditioning in the mapping from latent codes to images.

Deep natural anonymization often has demanding processing needs and hence requires powerful processors which may be heavy, power-demanding and/or expensive processing devices, for example graphics processing units (GPU) or the like. It is, in fact, often impractical to perform deep natural anonymization, since, typically, mobile devices have a limited capacity regarding their battery life and computational power. In order to be compliant with privacy policies to be obeyed it is, however, often not an option to transfer or to store data in a non-anonymized manner.

The present document discloses a solution to this problem according to the independent claims. Further advantageous aspects are disclosed with the dependent claims.

The personal data processing system of the present disclosure comprises a first device configured to capture image data including facial image data of a human being, the facial image data of a human being including a plurality of identification features each having a characteristic and a mimic expression feature having a characteristic. Facial image data of a human being is image data depicting a human face and it may also include image data depicting adjacent human body portions like hair, ears, neck and objects that may be disposed at the face and/or the adjacent body portions, for example glasses, hair slides, jewellery, piercings, or the like.

As the first device one may consider, for example, a so-called edge device which is a device that provides an entry point into a computer network. The edge device may have sensorial capabilities, computational capabilities and/or communication capabilities. Typically such devices may be realized as an embedded system, for example with a microcontroller or a FPGA (field programmable gate array) or an ASIC (application specific integrated circuit) or a combination thereof or the like. Functional components of the edge device may be realized as software or hardware or a combination thereof. The edge device may be seen as a part of a computer network providing an interface to the real world, for example by means of a sensor, for example a camera configured to capture image data. The camera may be, for example, a camera for the World Wide Web (web camera) or any other camera. An edge device may also be considered as a device of the Internet of Things (loT), that is, an loT device. IoT devices may be seen as edge devices with a strong focus on communication connectivity. Edge devices, and hence also loT devices, may be stationary or movable or integrated or embedded into a stationary or movable further device. Examples for such further devices may be a vehicle, a wearable, glasses, a personal computer, a tablet computer, a cell phone, a surveillance device, a camera (with the properties discussed above, for example) or the like.

The camera may be integrated in the first device, for example the edge device or the loT device, but it may also be connectable or connected to the first device. The image data may comprise an image and/or a sequence of images, for example video data and/or video streaming data.

Video data may include, for example, a sequence of images and it may also include sound data. The video data may be encoded, for example, using a video coding method, for example according to a format like H.262, H.264, H.265 or other formats not explicitly listed here.

The identification feature may optionally be used to identify a human being, for example by a human being and/or by a machine. For example, in the facial image data of a human being, the depicted shape of a nose, a depicted shape of an ear, a depicted shape of a lip, a depicted shape of an eyebrow, a depicted colour of a skin, a depicted colour of a hair, a depicted haircut etc. as well as the arrangement thereof may be the identification feature. The identification feature may correspond to an anatomical feature of a face of the human being, for example a distance between eyes or a length or a width of a nose, and the like. A characteristic of the identification feature may be, for example, a particular shape of the depicted nose, a particular shape of the depicted ear, a particular shape of the depicted lip, a particular colour of the depicted skin or the like. The characteristic of the identification feature may be represented, for example, by a numerical value and/or a graph and/or an element of a set and/or corresponding video data and/or corresponding image data.

It is appreciated that there may exist an identification feature that is not related or not directly related to facial image data, for example, the size of human being, the shape and/or characteristics of the body or a part of the body of the human being, handicaps, typical movements, typical clothes and accessories and the like. It is, however, in general possible that the methods and devices of this disclosure are suitable to deal with those non-facial identification features as well. It is also appreciated that the methods and devices described herein may be applied to creatures like animals, in particular mammals, like cats and dogs and the like.

Identifying, that is, the process belonging to the identification, may include comparing the characteristic of the identification feature of an, at first, unknown human being, for example depicted in the video data, with a characteristic of the corresponding identification feature of a known human being and/or of video data depicting the known human being. Identifying may also include, for example depending on the outcome of the comparison, assigning an identity of the known human being to the, at first, unknown human being. Identifying may, for example, be performed using an algorithm which may be implemented by means of a computer program. Correctly identifying refers to the assignment of a correct identity to the, at first, unknown human being. It shall be noted that, in the context of the present disclosure, identification is optional. It is, however, important to note that identification features may, in a general sense, be used for identifying a human being.

It is appreciated that the identification feature may comprise a plurality of identification features. Identifying may include face recognition as, for example, realized using a so-called re-identification network or model which is a computer algorithm or computer-based apparatus that is configured to re-identify persons/faces or other objects starting from images or video. A re-identification network can, for example, be based on a convolutional neural network or another machine learning model, which is trained to re-identify a person/face from image or video data. The input that is fed to this model is typically one or more images, for example video data, or an image patch that contains a face/person. The model output is an identity vector. The identity vector may then represent the identity of a person. Typically, the identity vector is a fixed-size vector of floating point numbers. So, each element of the identity vector may represent an identification feature and the value of the respective element may represent the characteristic of the respective identification feature. The value of the vector comprises the values of all of its elements. If, in a comparison, a value of an identity vector of a first person is equal or sufficiently close to a value of an identity vector of a second person, then the first and the second person may be considered to have the same identity.

Algorithms concerning the determination of the identity vector and its use for identifying a person may be found, for example, in the following publications:
Soleymani, Roghayeh, Eric Granger, and Giorgio Fumera. "Progressive boosting for class imbalance and its application to face re-identification." Expert Systems with Applications 101 (2018): 271-291.
Chen, Weihua, et al. "Beyond triplet loss: a deep quadruplet network for person re-identification." Proceedings of the IEEE Conference on Computer Vision and Pattern Recognition. 2017.
Wang, Faqiang, et al. "Joint learning of single-image and cross-image representations for person re-identification." Proceedings of the IEEE Conference on Computer Vision and Pattern Recognition. 2016.

The mimic expression feature may be, for example, a depicted pose, a change and/or a sequence of changes of the shape of the depicted nose, the depicted shape of the lip, the depicted shape of the eyebrow and/or an arrangement thereof. The mimic expression feature may have a characteristic, for example a particular depicted pose, a particular change and/or a particular sequence of changes of the depicted shape of the depicted nose, the depicted ear, the depicted lip etc.

It is possible to consider the mimic expression feature as a result of a muscle activity and/or a movement of a human being controlled by a neural activity of the human being. The mimic expression feature may be important in a communication, for example a non-verbal communication, between humans. Based on the mimic expression feature it is possible to transfer, for example, ideas, reactions, and thoughts in a communication. It is furthermore possible that the mimic expression feature is represented, for example, by a numerical value and/or a graph and/or an element of a set and/or corresponding video data and/or corresponding image data.

The working principle of how to determine the mimic expression feature may be described analogously to the identification feature, wherein the focus is put on facial features that are not used for the identification of a person but on features relevant for communication, in particular non-verbal communication, as described above. It is appreciated that the mimic expression feature may comprise a plurality of mimic expression features. The mimic expression features may be represented by a mimic expression vector. Typically, the mimic expression vector is a fixed-size vector of floating point numbers. So, each element of the mimic expression vector may represent a mimic expression feature and the value of the respective element may represent the characteristic of the respective mimic expression feature. The value of the vector comprises the values of all of its elements.

So, the first device is further configured to detect the facial image data of a human being in the image data, to determine a descriptor associated with the facial image data of a human being and including information describing the characteristic of the mimic expression feature and the characteristic of each identification feature of a selectable subset of the plurality of identification features, wherein the selectable subset of the plurality of identification features substantially does not allow a unique identification of the human being. Referring to the explanations above, the subset of the plurality of identification features may be selected by selecting elements or a portion of the identity vector.

The descriptor may comprise, for example, an element or a portion of the identity vector and the mimic expression vector or a portion of the mimic expression vector. The element or the portion of the identity vector may correspond to the selectable subset of the plurality of identification features that substantially does not allow a unique identification of the human being. In an embodiment, the subset may be an empty set.

However, the portion of the identity vector may represent very general features corresponding, for example, to sex or age, where the group of people, to which these features apply, is large enough to prevent a unique identification of the concrete human being.

In certain cases the descriptor may also comprise information about image data that may be useful for identifying the human being, like clothes, body shape and size, clothes of a person, jewellery and the like. The descriptor may as well include auxiliary data like, for example, a facial image data bounding box, a facial image data landmark, a facial image data attribute and characteristics, and the like. These items may be useful for locating and integrating artificial facial data into the image. The facial image data bounding box may include, for example, coordinates of a rectangular border in an image related coordinate system wherein the rectangular border encloses the facial image data. The facial image data landmark may, for example, refer to a distinctive feature of a face like an eye, a nose, an eyebrow, a mouth and the like and their arrangement in the facial image data. Facial image data attributes and characteristics may overlap or partially overlap with the identification feature and/or the mimic expression feature and include, for example, gender, age (range), emotions, glasses, the extent of eyes/mouth open/closed and the like.

Furthermore, the first device is configured to provide an obfuscated image wherein in the obfuscated image the facial image data of a human being is replaced with placeholder data.

Placeholder data may be, for example, image data that is different from the replaced data, that is, the replaced facial image data of a human being. As such, the replacement data could be image data completely unrelated to the replaced data, for example image data having a unique colour, or a pattern. It may also be pixelated image data, for example pixelated image data of the replaced image data. The placeholder data may, for example, cover the substantially the same image area as the facial image data. It may however, also cover a larger image area and may also have a different shape. For example, the placeholder data may have a shape of a rectangle, a circle, an ellipse, a star, a polygon or the like.

In addition, the first device is also configured to provide the obfuscated image and the descriptor to a second device. The second device may, in contrast to the first device, be a device with more powerful computational capabilities, for example a server. The server may be disposed as a part of the computer network, for example an internet or a local area network or the like. The second device may perform, based on jointly processing the obfuscated image and the descriptor, a replacement of the placeholder data of the obfuscated image with artificial facial image data corresponding to the descriptor and, optionally, the obfuscated image to produce the deeply anonymized image. Jointly processing may include, for example, performing image processing methods like colour, brightness and contrast matching such that the artificial facial image data created based on the information in the descriptor matches the colour, brightness and contrast of the obfuscated image to enable a seamless integration of the artificial facial image data into the obfuscated image having the anonymized image as result. Jointly processing may, however, also include a context estimation, for example, urban or rural context, spare time or work context or the like, and using this context for, in an example, context-related biasing or modifying information in the descriptor when generating the artificial image data, for example, with respect to age, gender or objects disposed close to the face. For example, in a work context, it may be an option to omit a piercing or tattoo in the anonymized image. A degree or a specific kind of bias or modification may be selectable.

From the above it is apparent that the first and the second device split their work load, for example to perform the deep natural anonymization. The advantages of the work split are manifold. For example, synthetic face generation as, for example, performed with synthetic face generation networks as a part of deep natural anonymization technology requires heavy processing which may be incompatible with nowadays edge or loT devices. Analogously, the substantially seamless introduction of the synthetically generated facial data into the image to be modified may require heavy computational efforts. So, by letting the second device generate the artificial facial image data to replace the replacement data, the first device may focus on tasks that require less computational power and less electrical power. So the first device may be smaller, lighter and, if, for example, battery driven, it may need less electric energy and, hence, less charging. So, the first device may be compatible with typical customer requirements like small and light devices with little power consumption. Furthermore, the first device may be low-cost, since heavy processing devices like, for example, a GPU are not required for the first device to perform the disclosed tasks. In fact, the first device may be so small that it could be used, for example, in a smart device like smart contact lenses, glasses etc. This work split between the first and the second device is as well justified by the fact that the facial image data is not always needed in data analysis such that replacing the original facial image data by artificial facial image data may be, in certain applications, unnecessary.

So, in view of the objective of the disclosure, it is an advantage of the disclosed personal data processing system to provide a means to acquire and process visual data with a focus on privacy requirements. The facial image data is detected by the first device, which may be, for example, an edge or loT device, and the facial image data is eventually replaced with placeholder data by the first device. Furthermore, by the first device, the descriptor is provided. These operations performed by the first device are computationally relatively inexpensive. On the second device, which may be, for example, a server in a cloud, artificial facial image data is generated according to the descriptor and, optionally, the obfuscated image to provide a deeply anonymized image, that is the image modified with deep natural anonymization technology, which, for example, can be used in machining learning as training/validation data.

In an embodiment, the descriptor may further comprise metadata including non-image data captured in the context of capturing the image data and associated with the image data. Such metadata may be, for example, sensorial information like a date and a time, a duration, a position, for example a geographical position and/or a geographical height, a velocity, an acceleration, a temperature, a humidity, a magnetic field, a light condition and the like. The metadata may also include a situation-related context data like, for example, 'on the street', 'in the forest', 'at work', 'at home', 'on a party', 'on public transport', 'at the doctors', 'in a shop' or 'position in a shop', 'on a concert', 'at the gym' and the like. As metadata it is also possible to use data about a society context like, for example, before/during/after a political event, a political situation and the like. In general, the metadata may have a great importance for later data analysis of the deeply anonymized image.

In an embodiment the second device may include a storage configured to store the descriptor and the obfuscated image. The storage may be used to store the obfuscated image and the descriptor for a long time, for example a week, a month, a year or shorter or longer. Since neither the obfuscated image data nor the descriptor contain data that could be sufficient to identify the human being, the stored data may be, in general, consistent with privacy policies and regulatory requirements.

It is also possible that the second device retrieves the descriptor from the storage. The second device may provide the information or a part of the information of the descriptor and/or the obfuscated image to a user. The user may be a human user. The user may also be a machine, for example a computer or the like, that is configured to analyse and/or further process the retrieved data. The second device may therefore include a functionality of a data base, for example storing data and retrieving data for later analysis.

In an embodiment the second device may send the anonymized image to a third device configured to display the anonymized image to a user. The third device may be a device that is configured to display image data. It may, for example, be a computer with a monitor, a cell phone or a tablet computer or even a television, cinema or the like. In the anonymized image, the original facial image data is replaced with the artificial facial image data. Due to the fact that the descriptor includes only identification features that do not allow a unique identification of the human being, it is in general not likely that the artificial facial image data resembles, with respect to the identification features, the original facial image data so that the image data with the artificial facial image data can be considered as anonymized. Due to considering the mimic expression features when generating the artificial facial image data it is hence possible to present an anonymized image to a user which may be perceived by the user as very natural.

It is appreciated that the image data may include video data or may correspond to still image data captured by a photographic camera.

In an embodiment the first device and/or the second device may be real-time devices configured to process data in real-time. The term real-time may signify a short time span in the sense of a delay due to processing or transmitting the image data, that is, an at most insignificant processing and/or transmission delay, for example a delay of less than 5 seconds, preferably less than 1 second, more preferably less than 0.5 seconds and most preferably less than 0.1 seconds. In certain cases the delay may also be longer.

In an embodiment the first device and the second device may, for example via a communication network, transfer data including the image data and the descriptor from the first device to the second device. The communication network may, for example, comprise a data network, like the internet or a part thereof, a local area network and/or a telephone network or the like. It may also comprise a radio or an optical network. A direct, for example electric, radio or optical, link between the first device and the second device configured to transfer data is also conceivable. In such a case the direct link may be established, for example, with an appropriate cable or conductor, fibre and/or a radio connection between the first and the second device.

In an embodiment the second device may perform, based on processing the descriptor or jointly processing the obfuscated image and the descriptor, a detection of an emotion of the human being, wherein the detected emotion is related to the descriptor or the obfuscated image and the descriptor, respectively. The emotion of a human being may, for example, comprise feelings of a human being like, for example, fear, anger, sadness, joy, disgust, surprise, trust, shame, love, astonishment, shyness, cold, heat, and the like. At least some of the emotions may be detected from facial image data and/or the descriptor, for example, if there is a correspondence between emotion and the mimic expression feature. In a certain embodiment, the detection of the emotion may be denoted as classification. Classification may be performed by a classifier. The detected emotion may be provided to a user. It is possible that the detected emotion is selectable, for example from a set of selectable emotions. The selectable emotions may be collected in selectable sets of emotions. The selectable emotion may be predetermined, for example by a user. The second machine may include an interface configured to provide a means to select the emotion. The user may be, for example a human user. It may also be, for example, a machine, for example a machine that is configured to process data. The user, for example, may react to a provided detected emotion by changing an operation mode of a technical device controlled by the user. For example, if on a bus the detected emotion is 'cold', then the bus driver may increase a target temperature of a bus heating. The user may be a human user, but it may also be a machine like a computer or a control apparatus.

The present disclosure also includes a method of operating a personal data processing system. The method of operating the personal data processing system may, for example, be performed using a personal data processing system as described above. The features described with respect to the personal data processing system are hence applicable to the method of operating the personal data processing system. Vice versa, the features described with respect to the method of operating the personal data processing system are applicable to the personal data processing system.

The method of operating the personal data processing system comprises the steps
- capturing image data including facial image data of a human being, the facial image data of a human being including a plurality of identification features each having a characteristic and a mimic expression feature having a characteristic;
- detecting the facial image data of a human being the image data,
- determining a descriptor associated with the facial image data of a human being and including information describing the characteristic of the mimic expression feature and the characteristic of each identification feature of a selectable subset of the plurality of identification features, wherein the selectable subset of the plurality of identification features substantially does not allow a unique identification of a human being,
- providing an obfuscated image wherein in the obfuscated image the facial image data of a human being is replaced with placeholder data.

In an embodiment, the method of operating the personal data processing system may as well comprise the step of performing, based on jointly processing the obfuscated image and the descriptor, a replacement of the placeholder data of the obfuscated image with artificial facial image data corresponding to the descriptor and, optionally, the obfuscated image to produce an anonymized image.

The user may be, for example a human user. It may also be, for example, a machine, for example a machine that is configured to process data.

In an embodiment, the method of operating the personal data processing system may comprise the step capturing metadata including non-image data captured in the context of capturing the image data and associated with the image data.

The method of operating the personal data processing system may also comprise the step storing the descriptor and the obfuscated image in a storage.

In addition, the method of operating the personal data processing system may comprise the step retrieving the descriptor from the storage and providing the information or a part of the information of the descriptor and/or the obfuscated image to a user.

In an embodiment the method of operating the personal data processing system may comprise the step sending the anonymized image to a third device configured to display the anonymized image to a user.

The method of operating the personal data processing system may comprise the step detecting, based on processing the descriptor or jointly processing the obfuscated image and the descriptor, an emotion of the human being, wherein the detected emotion is related to the descriptor or the obfuscated image and the descriptor, respectively. The step of detecting an emotion may be implemented with a classifier performing a classification method, for example a classifier like k-nearest-neighbour, a support vector machine or an artificial neural network. The classification may map the mimic expression feature to an emotion out of a set of selectable emotions, wherein the set of selectable emotions may be predetermined. The classifier may provide the result of the classification, that is the detected emotion, to, for example, a user or to a device, for example the third device.

The method of operating the personal data processing system may hence include the step selecting the emotion. The method may also comprise the step providing the detected emotion to a user.

Furthermore, the personal data processing system may be used in a data analysis system and/or a communication system.

Features described with respect to the data processing method may also be implemented with respect to the data processing system and vice versa.

The Figures described herein illustrate embodiments of the presently disclosed subject matter, and are illustrative of selected principles and teachings of the present disclosure. In the Figures:
Fig. 1: schematically shows a principle of generating artificial facial image data;
Fig. 2a: shows a block diagram of a known edge device based anonymization scheme for image data;
Fig. 2b: shows, in the context of the block diagram of Fig. 2a, a block diagram of a data retrieval from a server;
Fig. 3a: shows a block diagram of a known cloud based anonymization scheme for image data;
Fig. 3b: shows a block diagram of a data retrieval from a server;
Fig. 4: schematically shows a personal data processing system with a first device and a second device;
Fig. 5: schematically shows a transfer of data from the second device to a third device;
Fig. 6a-6c: show block diagrams with a storage of the second device;
Fig. 7: schematically shows an application example in accordance with Figures 6a-6c;
Fig. 8: continues the example of Figure 7;
Fig. 9a and 9b: continue the example of Figures 7 and 8;
Fig. 10: shows a control flow diagram of a method to operate a personal data processing system.

Recurring features in the Figures are provided with identical reference numerals.

They may be partially omitted when these features are not referenced in the context of a Figure description.

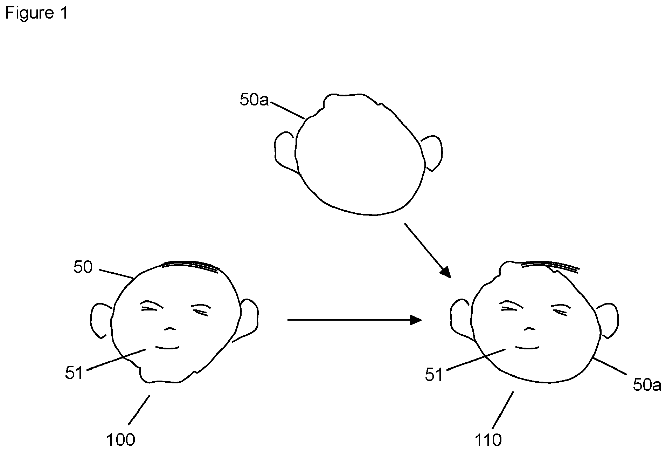

Figure 1 schematically shows a principle of generating artificial facial image data. Facial image data of a human being 100, may include an identification feature 50, such as, for example, in image data, a shape of a depicted nose, a shape of a depicted ear, a shape of a depicted lip, a shape of a depicted eyebrow, a colour of a depicted skin, a colour of a depicted hair, a depicted haircut etc. as well as the arrangement thereof. The identification feature 50 may have a characteristic, for example a particular shape of the depicted identification features, such as a particular shape of a depicted nose, a particular shape of the depicted ear, a particular shape of the depicted lip, a particular colour of the depicted skin etc. It is possible that the identification feature 50 corresponds to an anatomical feature of a human being.

The identification feature 50 may be used to identify the human being, for example by a human being and/or by a machine. Identifying may include comparing the characteristic of the identification feature 50 of an, at first, unknown human being with a characteristic of the corresponding identification feature 50 of a known human being. Identifying may also include, for example depending on the outcome of the comparison, assigning an identity of the known human being to the, at first, unknown human being. Identifying may, for example, be performed using an algorithm which may be implemented by means of a computer program. Furthermore, identifying may use sensorial data, for example image data, in particular facial image data as, for example, captured by an image sensor like a camera.

The identification feature 50 may be represented, for example, by a numerical value and/or a graph and/or an element of a set and/or corresponding video data and/or corresponding image data.

The facial image data of a human being 100, may include a mimic expression feature 51, such as, for example, a depicted pose, a change and/or a sequence of changes, as for example in a sequence of images like video data, of the shape of the depicted nose, the shape of the depicted lip, the shape of the depicted eyebrow and/or an arrangement thereof. The mimic expression feature 51 may have a characteristic, for example a particular depicted pose, a particular change and/or sequence of changes of the shape of the depicted nose, the depicted ear, the depicted lip etc.

The mimic expression feature 51 may be a result of a muscle activity of the human being or a movement of the human being. The mimic expression feature 51 may be important in a communication, for example a non-verbal communication, between humans, for example under participation of the human being. Based on the mimic expression feature 51 it is possible to transfer, for example, ideas, reactions, and thoughts in a communication.

The mimic expression feature 51 may be represented, for example, by a numerical value and/or a graph and/or an element of a set and/or corresponding video data and/or corresponding image data.

The mimic expression feature 51 may be interpreted by a human being and/or by a machine, for example a machine using an algorithm. Interpreting the mimic expression feature 51, for example assigning a sense to the corresponding mimic expression, may, for example, be performed using an algorithm which may be implemented by means of a computer program.

Figure 1 illustrates schematically an anonymization of the facial image data of a human being 100 as an example. As described above, the facial image data of a human being 100 comprises the identification feature 50 having a characteristic. In the Figure 1 the characteristic of the identification feature 50 in the facial image data of a human being 100, depicted in the left part of the Figure 1, is different from the characteristic of the identification feature 50a of artificial facial image data 110, depicted in the upper part of the Figure 1. The result of an anonymization of the facial image data, that is the artificial image data 110, is shown in the right part of the Figure 1: the characteristic of the identification feature 50 in the facial image data of a human being 100 is replaced by the characteristic of the identification feature 50a of the artificial facial image data 110. However, the mimic expression feature 51 is the same in the facial image data of a human being 100 (left part of the Figure) and in the modified, that is anonymized facial image data of a human being 100 which is the artificial image data 110 (right part of the Figure), wherein, in the example in Figure 1, the mimic expression feature 51 is represented by a specific orientation and particular shape of the eyes, the eyebrows, the nose and the mouth and their arrangement with respect to each other within the facial image data.

An algorithm for performing the anonymization operation may be found in the references cited above and references thereof.

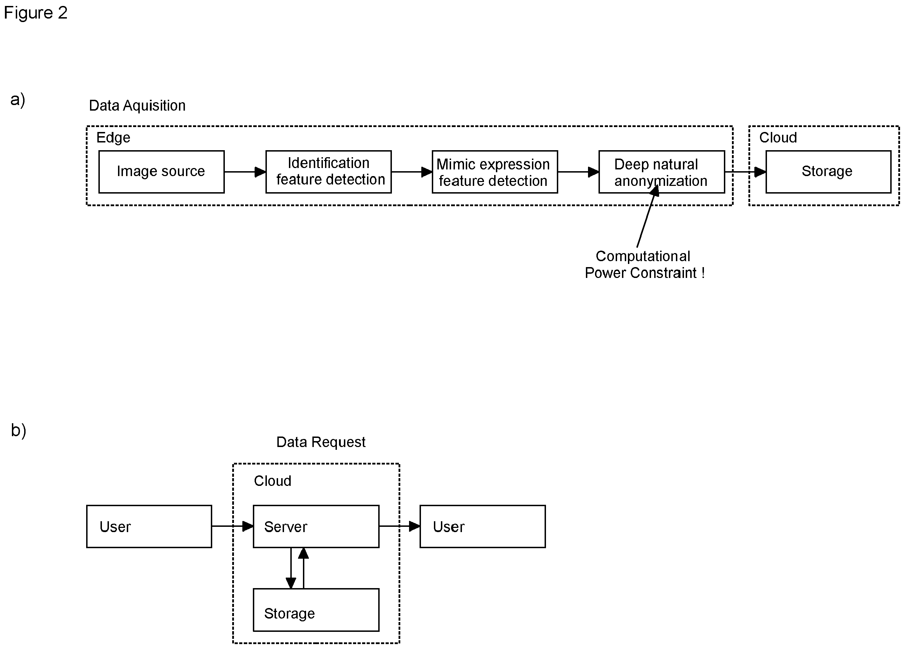

Figure 2a shows a block diagram of a known edge device based anonymization scheme of image data 60. The edge device comprises an image source like, for example, a camera or another imaging system. The image source provides the image data 60. In the here depicted case, the image data 60 includes facial image data of a human being 100. The image data 60 is then processed to perform an identification feature detection, that is, the detection of the identification feature 50 in the facial image data of a human being 100 which includes a determination of the characteristic of each detected identification feature 50. In a further step, which may be performed, as depicted in Figure 2a, in a sequence and/or in parallel or at least partially in parallel (not depicted in Figure 2a), the mimic expression feature 51 is detected. Based on the image data 60, the detected identification feature 50 and the detected mimic expression feature 51 the deep natural anonymization may be performed using the algorithms referenced above. As indicated in Figure 2a, the anonymization of the image data 60 is constrained by an available computational power of the edge device. This constraint is an important restriction and disadvantage of this architecture. The anonymized image 62 is transferred to a storage, for example in a cloud.

Figure 2b shows, in the context of the block diagram of Fig. 2a, a block diagram of a data retrieval from a server. A user may request via a server, which may be disposed in a cloud, data that is stored in the storage in the cloud. Such data may be, for example, the anonymized image.

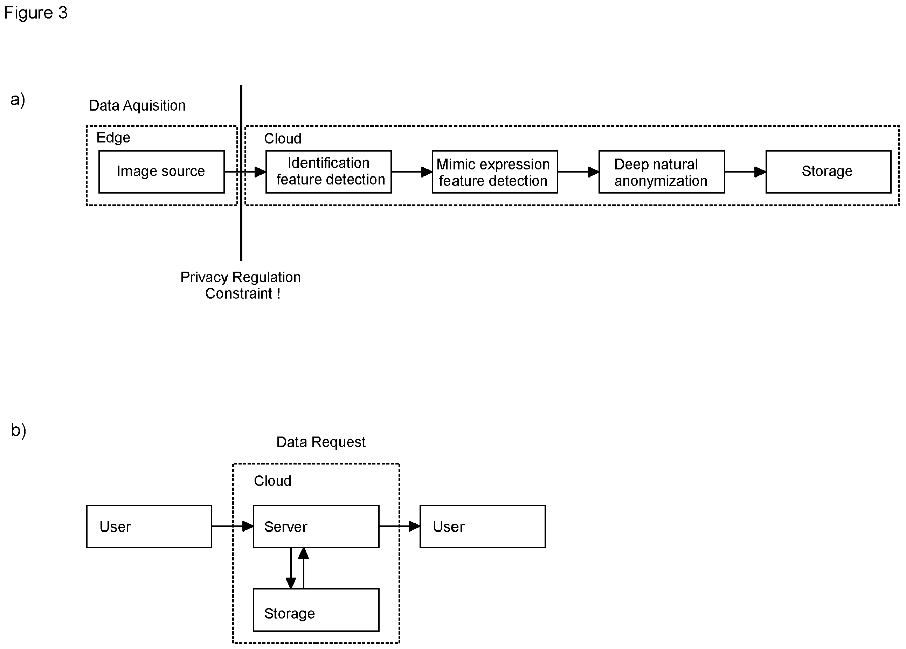

Figure 3a shows a block diagram of a known cloud based anonymization scheme for image data. The block diagram in Figure 3a resembles the block diagram in Figure 2a, except that the allocations of the functional blocks to edge device and cloud are different. In Figure 3a the image source is located in the edge device. The other depicted functional blocks are disposed in the cloud. The crucial point is that non-anonymized image data may leave the edge device by way of transferring non-anonymized image data to the cloud. This transfer may be subject to privacy regulation and may not be allowed by law.

Figure 3b schematically depicts a user scenario of requesting data saved in the storage, for example of a cloud. It is exactly similar to the scenario depicted in Figure 2b. That is, from the point of view of the depicted user scenario, there is no difference between anonymization on the edge device or in the cloud.

In general, Figures 2 and 3 (short for Figures 2a, 2b and 3a, 3b) show existing systems and their limitations. Either, as in Figure 2a, anonymization may be constrained by available computational power or, as in Figure 3a, restricted by law. Therefore, the personal data processing systems of Figures 2 and 3 have considerable disadvantages. It is appreciated that, in Figures 2 and 3 (and in subsequent Figures as well), not all processing blocks are depicted for the sake of the simplicity of the description. More processing blocks and more functionality may be needed in a real implementation.

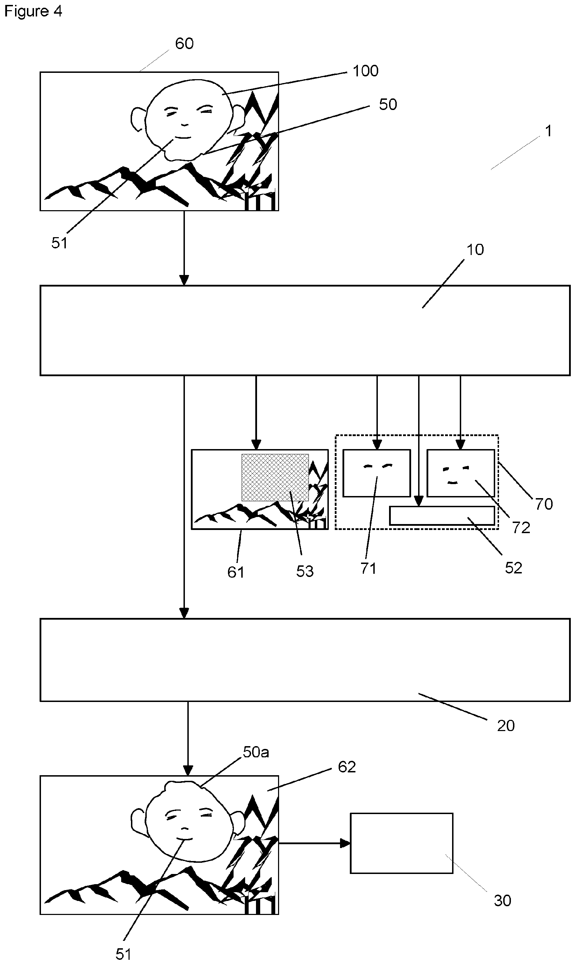

A solution to the above discussed problems according to the present disclosure is depicted in Figure 4 which schematically shows a personal data processing system with a first device 10 and a second device 20. Image data 60 is captured by the first device 10. The image data 60 comprises facial image data of a human being 100, wherein the facial image data of a human being 100 includes a plurality of identification features 50 and a mimic expression feature 51. It is appreciated that the mimic expression feature 51 may be more than one mimic expression feature 51. The image data 60 is captured by the first device 10. The first device 10 detects the facial image data of a human being 100 in the image data 60, determines a descriptor 70 associated with the facial image data of a human being 100. The descriptor 70 includes information 71, 72 describing the characteristic of the mimic expression feature 51 and the characteristic of each identification feature of a selectable subset of the plurality of identification features 50, wherein the subset of the plurality of identification features 50 substantially does not allow a unique identification of the human being. Furthermore, the first device 10 generates an obfuscated image 61 where the facial image data of a human being 100 is replaced with placeholder data 53. In the case depicted in Figure 4, the placeholder data 53 is image data with a rectangular shape and a predefined pattern and/or colour which allows a recognition of the placeholder data 53 directly from the obfuscated image 61.

The descriptor can be determined, for example, using a re-identification network which is based on a convolutional neural network and which is trained to determine an identity vector from image data. The re-identification network can, in particular, be trained to only determine the respective identity vector based on the selected or pre-determined subset of identification features, which are pre-selected in such a manner that they do not allow a unique identification of the respective person.

The mimic expression can also be determined using a re-identification network, which has been trained to determine a respective vector of the desired mimic expression features.

The obfuscated image 61 and the descriptor 70 are provided to a second device 20.

The second device 20 uses the descriptor 70 and the obfuscated image 61 to generate an anonymized image 62, that is, an image with artificially generated facial image data, that is artificial facial image data 110, wherein the artificial facial image data 110 (see Figure 1) is used to replace the placeholder data 53. It is appreciated that the facial image data of a human being 100 may also, to a limited extent, include adjacent image data not depicting the face of the human being. The artificial facial image data 110 may be generated including the identification features 50 of the selected subset of identification features, for example gender, age, ethnicity or the like, and the mimic expression feature 51. It is appreciated that the mimic expression feature 51 may comprise one or more mimic expression features 51. The anonymized image 62 may be provided to a user and/or a third device 30 wherein the third device 30 may, for example, display the anonymized image 62 or may further process the anonymized image 62, for example in the context of data analysis or data analytics, classification, training/validation of an artificial neural network or any other algorithm from the field of artificial intelligence or the like. As an option, which is not depicted in Figure 4, it is also possible to provide the descriptor 70 or parts of the descriptor 70, for example the metadata 52, to the third device 30 and/or the user. Also, not depicted in Figure 4 as well, the obfuscated image 61 may be provided to the third device and/or the user.

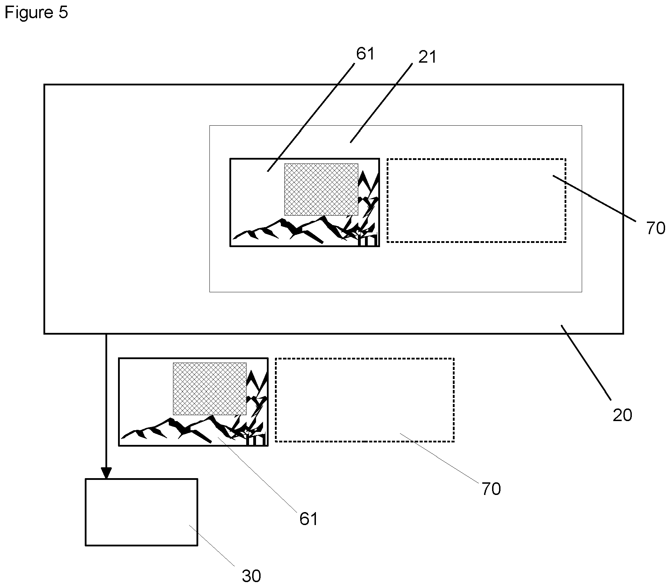

Figure 5 schematically shows a transfer of data from the second device 20 to the third device 30 as well. Here, the second device 20 provides the obfuscated image 61 and the descriptor 70 to the third device. As an option, the second device 20 may include a storage 21 that is configured to store the obfuscated image 61 and descriptor 70. Hence, it is possible to retrieve the obfuscated image 61 and/or the descriptor 70 from the storage 21 and provide it/them to the third device 30. In addition and similar to the functionalities described above, the third device 30 may also be capable of processing the obfuscated image 61 and/or the descriptor 70.

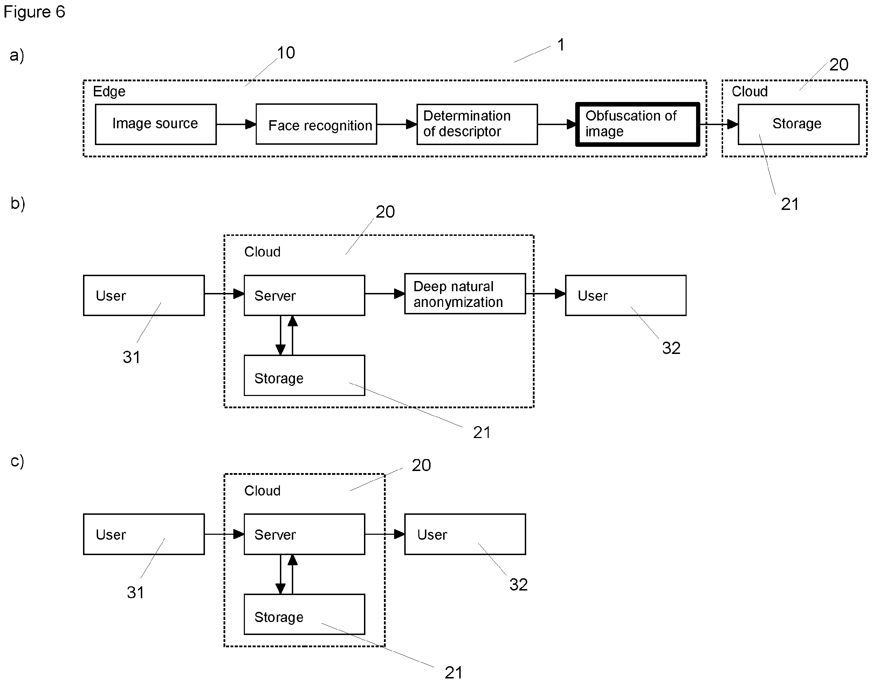

Figures 6a to 6c show block diagrams with the storage 21 of the second device 20. Similar to the Figures 4 and 5, Figure 6a depicts the personal data processing system 1 wherein the second device 20 includes the storage 21. As explained in the context of Figure 5, the storage 21 may store, for example, the obfuscated image 61 and also the descriptor 70. From this point of view, the storage 21 and its content can be seen as in general compliant with privacy regulations. Storing the obfuscated image 61 and also the descriptor 70 is useful for a later processing of the stored data. In the embodiment of Figure 6a, an image source generates image data 60. On the image data 60, a face recognition is performed to detect facial image data of a human being 100. Using the detected facial image data of a human being 100, the descriptor 70 is determined and the obfuscated image 61 is generated. The obfuscated image 61 and the descriptor are provided to the second device 20 with the storage 21. The obfuscated image 61 and the descriptor 70 may be stored in the storage 21. In Figure 6a, the image source, the face recognition, the determination of the descriptor and the obfuscation of the image are disposed within the first device 10, which may be an edge device. It is, however, possible, that some of said functionalities are not within the first device 10, but, for example, connected or connectable to the first device 10. For example, the image source, which may be a camera, may be connectable or connected to the first device 10.

Figures 6b and 6c depict block diagrams of two possible applications. According to Figure 6b, a first user 31 may request a server, which may be seen as the second device 20 or a portion of the second device 20, to retrieve from the storage 21 the obfuscated image 61 and the descriptor 70 to generate the anonymized image 62 and provide it to a second user 32. It is noted that first and second user 31, 32 may be identical. Similarly to Figure 6b, according to Figure 6c the first user 31 may request the server to retrieve the obfuscated image 61 and/or the descriptor 70 from the storage and provide it/them to the second user 32. First and second user 31, 32 may be identical. It is hence possible to access the data stored in the storage 21, that is, the obfuscated image 61 and/or the descriptor 70, and to use said data in further processing steps like analysis, analytics, classification, statistics, training/validation etc.

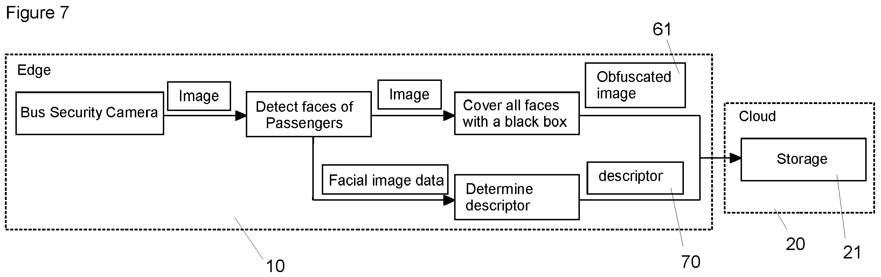

Figure 7 schematically shows an application example in accordance with the present disclosure and also in accordance with the embodiment shown in Figures 6a to 6c. As an example, the first device 10 may be used in the context of public transport and the first device 10 may be an edge device. The image source of the first device 10, in this example, is a bus security camera configured to produce images. The first device 10 detects faces of passengers and covers, in the image, each of the faces with a black box (black rectangular area) and hence generates the obfuscated image 61. In addition, the first device 10 includes a face detection and determines the descriptor 70, which may include the mimic expression feature 51 and/or metadata 52 as described above and the selectable subset of the plurality of identification features 50 that does not allow a unique identification of the human being. Eventually both, obfuscated image 61 and descriptor 70 are provided to the storage 21 of the device 20. The device 20 may, for example, be a cloud or be disposed in a cloud or a computer network.

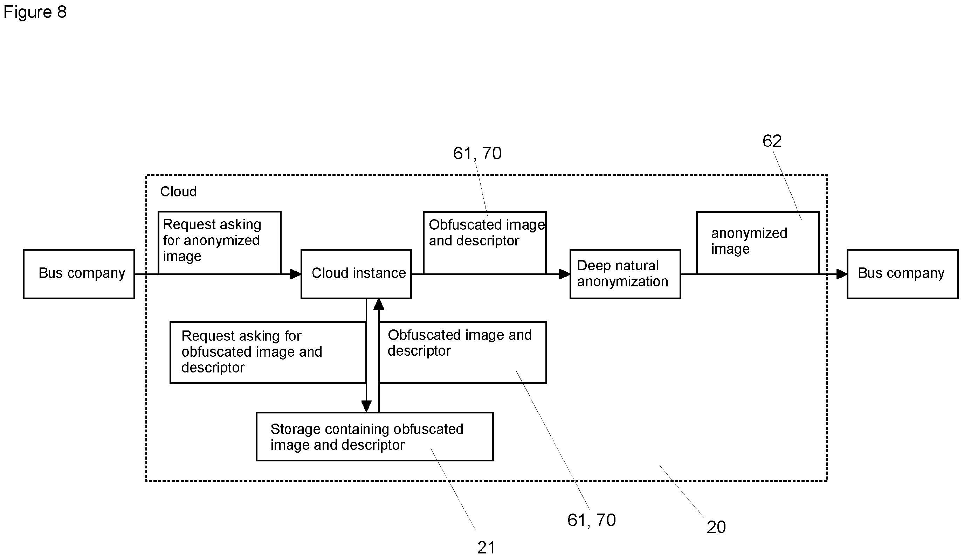

Figure 8 provides more details about a functionality of the second device 20 of Figure 7. In this example a bus company sends a request to the second device 20, for example a cloud instance, asking for an anonymized image 62. The cloud instance then sends a request to the storage 21, for example a file system, where the obfuscated image 61 and the descriptor 70 are stored. The obfuscated image 61 and the descriptor 70 are provided by the storage 21 to the cloud instance and then, using an algorithm as described above, they are used to generate the anonymized image 62. The anonymized image 62 is provided to the bus company. The bus company may then use the anonymized image 62, for example, for data analysis, data analytics, image processing, image analysis and/or training/validation of an artificial intelligence model like a neural network or the like, for example to gain knowledge about improvements related to its business.

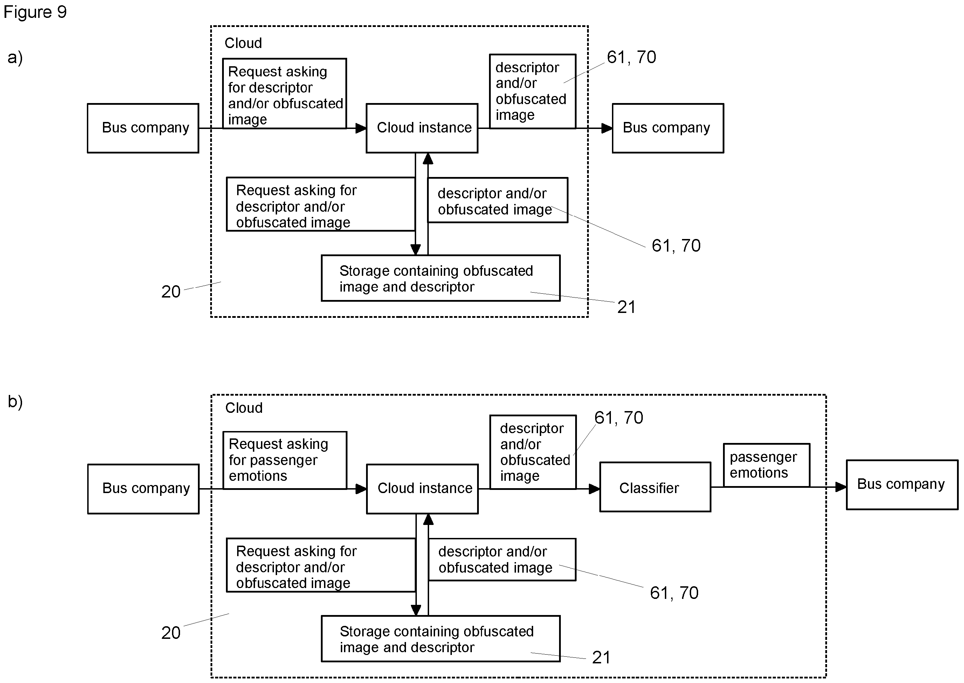

In Figures 9a and 9b the example of Figures 7 and 8 is continued. In the example of Figure 9a, the bus company sends a request to the second device 20, for example the cloud instance, asking for the descriptor 70 and/or the obfuscated image 61.

The cloud instance then sends a request to the storage 21, for example the file system, where the obfuscated image 61 and the descriptor 70 are stored. The descriptor 70 and/or the obfuscated image 61 are/is provided by the storage 21 to the cloud instance and then provided to the bus company. The application scenario depicted in Figure 9a allows, for example, the bus company to analyse information of the descriptor and/or the obfuscated image or to use it/them for any purpose like data analysis, data analytics, statistics, data mining and, for example based thereon, business, service and process development and improvement, advertising and cost reduction.

The scenario depicted in Figure 9b is similar to the scenario of Figure 9a. Here, more functionality is located in the second device 20, in particular more functionality to analyse and process data in order to provide the bus company, or in general a user, with aggregated information retrieved from the data stored in the storage 21. Here in this example, the bus company is interested in emotions of passengers, for example in order to get information whether passengers are satisfied with a service of the bus company. The bus company sends a request to the second device 20, for example the cloud instance, asking for emotions of the passengers. The cloud instance then sends a request to the storage 21, for example the file system, where the obfuscated image 61 and the descriptor 70 are stored. The descriptor 70 and/or the obfuscated image 61 are/is provided by the storage 21 to the cloud instance and then provided to a data processing unit, in this case a classifier. The classifier is configured to process the obfuscated image 61 and/or the descriptor 70 and the information therein, for example by means of an artificial neural network, a support vector machine or any other artificial intelligence model and to provide a result to the bus company wherein the emotions of the passengers are classified according to given criteria. The criteria may be, for example, predetermined by the bus company and the classifier may be, for example, configurable to adjust the criteria for the classification. Typical emotions of passengers may be good mood, happiness, dissatisfaction, rage, fatigue, boredom, stress etc.

Based on the classified emotions it is possible to optimize travel conditions of passengers on the bus. Since the classification may be performed automatically, it is hence possible to optimize the travel conditions automatically as well. For example, if dissatisfied emotions are detected by way of automatic classification as described above, it is possible to automatically trigger a, for example automatic, fault detection procedure. The fault detection procedure may, for example, include predetermined tests of predetermined devices or components that may cause dissatisfied emotions of passengers. As an example, one may think of a defective air conditioning of the bus which may lead to passenger dissatisfaction. For starting the fault detection procedure it is conceivable that the second device, for example the cloud instance, the bus company or a device thereof, sends an instruction to the bus or a device thereof or, for example, the first device, which may be the edge device on the bus.

As such, the emotion classification may be included in a technical fault detection and diagnosis system, which may be part of a supervisory control, for example of the above discussed bus application. A specific advantage of the disclosed solution is that, for example, high performance computations may be performed on a server, which may have much higher performance than an edge device, as for example on the bus, and that all steps of this solution may be performed in accordance with privacy regulations, for example anonymized processing of data. Since the edge device may require a relatively low computational performance, the edge device may be cheaper and less power demanding, which is an important requirement for mobile applications, as, for example, the bus application.

The application example of Figures 7 to 9b clearly shows advantages of the disclosed personal data processing system 1: an analysis and processing of image data 60 is possible in accordance with privacy regulations due to anonymization which prevents unique identification of the human being.

It should be appreciated that the example of the Figure 7 to 9 may be easily adopted to numerous other fields of applications, for example any monitoring or surveillance application, data analysis and analytics, process improvement etc. in public and/or private sector, industrial processes, commerce, culture, health, defence, security, agriculture etc.

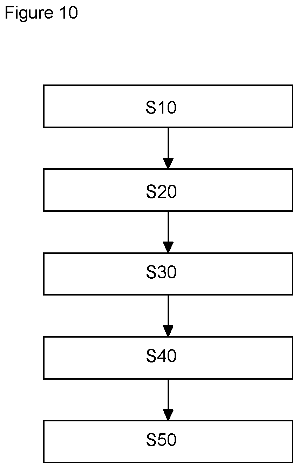

Figure 10 shows a control flow diagram of a method to operate the personal data processing system 1. The method comprises the steps
- S10: capturing image data 60 including facial image data of a human being 100, the facial image data of a human being 100 including a plurality of identification features 50 each having a characteristic and a mimic expression feature 51 having a characteristic;
- S20: detecting the facial image data of a human being 100 in the image data 60,
- S30: determining a descriptor 70 associated with the facial image data of a human being 100 and including information describing the characteristic of the mimic expression feature and the characteristic of each identification feature 71, 72 of a selectable subset of the plurality of identification features 54, wherein the selectable subset of the plurality of identification features 54 substantially does not allow a unique identification of a human being,
- S40: providing an obfuscated image 61 wherein in the obfuscated image 61 the facial image data of a human being 100 being is replaced with placeholder data 53;
- S50: performing, based on jointly processing the obfuscated image 61 and the descriptor 70, a replacement of the placeholder data 53 of the obfuscated image 61 with artificial facial image data 110 corresponding to the descriptor 70 and, optionally, the obfuscated image 61 to produce an anonymized image 62.

It is appreciated that the above examples are illustrative and not limiting and may, for example, be deliberately combined.

### List of reference numerals

- 1: personal data processing system
- 10: first device
- 20: second device
- 21: storage
- 30: third device
- 31: first user
- 32: second user
- 50: identification feature
- 50a: identification feature of artificial facial image data
- 51: mimic expression feature
- 52: metadata
- 53: placeholder data
- 54: selectable subset of the plurality of identification features
- 60: image data
- 61: obfuscated image
- 62: anonymized image
- 70: descriptor
- 71: information describing a characteristic of the identification feature
- 72: information describing a characteristic of the mimic expression feature
- 100: facial image data of a human being
- 110: artificial facial image data

## Claims

1. Personal data processing system (1) comprising
- a first device (10) configured to capture image data (60) including facial image data of a human being (100), the facial image data of a human being (100) including a plurality of identification features (50) each having a characteristic and a mimic expression feature (51) having a characteristic;
- the first device (10) further configured to detect the facial image data of the human being (100) in the image data (60), to determine a descriptor (70) associated with the facial image data of the human being (100) and including information describing the characteristic of the mimic expression feature and the characteristic of each identification feature (71, 72) of a selectable subset of the plurality of identification features (54), wherein the selectable subset of the plurality of identification features (54) substantially does not allow a unique identification of the human being;
- the first device further configured to provide an obfuscated image (61) wherein in the obfuscated image (61) the facial image data of the human being (100) is replaced with placeholder data (53);
- the first device (10) further configured to provide the obfuscated image (61) and the descriptor (70) to a second device (20);
- the second device (20) configured to perform, based on jointly processing the obfuscated image (61) and the descriptor (70), a replacement of the placeholder data (53) of the obfuscated image (61) with artificial facial image data (110) corresponding to the descriptor (70) to produce an anonymized image (62).

2. Personal data processing system (1) according to claim 1, wherein the descriptor (70) further comprises metadata (52) including non-image data captured in the context of capturing the image data (60) and associated with the image data (60).

3. Personal data processing system (1) according to any one of the claims 1 to 2, wherein the second device (20) includes a storage (21) configured to store the descriptor (70) and the obfuscated image (61).

4. Personal data processing system (1) according to claim 3, the second device (20) configured to retrieve the descriptor (70) from the storage (21) and to provide the information or a part of the information of the descriptor (71, 72) and/or the obfuscated image (61) to a user (32).

5. Personal data processing system (1) of any one of claims 1 to 4, wherein the second device (20) is further configured to send the anonymized image (62) to a third device (30) configured to display the anonymized image (62) to a user (32).

6. Personal data processing system (1) of any one of claims 1 to 5, wherein the image data (60) includes video data.

7. Personal data processing system (1) according to any one of claims 1 to 6, wherein the first device (10) and/or the second device (20) are real-time devices configured to process data in real-time.

8. Personal data processing system (1) according to any one of claims 1 to 7, wherein the first device (10) and the second device (20) are connected via a communication network configured to transfer data including the image data (60) and the descriptor (70) from the first device (10) to the second device (20).

9. Method of operating a personal data processing system (1) according to any one of claims 1 to 8, comprising
- capturing image data (60) including facial image data of a human being (100), the facialimage data of a human being (100) including a plurality of identification features (50) each having a characteristic and a mimic expression feature (51) having a characteristic;
- detecting the facial image data of the human being (100) in the image data (60),
- determining a descriptor (70) associated with the facial image data of the human being (100) and including information describing the characteristic of the mimic expression feature and the characteristic of each identification feature (71, 72) of a selectable subset of the plurality of identification features (54), wherein the selectable subset of the plurality of identification features (54) substantially does not allow a unique identification of the human being,
- providing an obfuscated image (61) wherein in the obfuscated image (61) the facial image data of the human being (100) is replaced with placeholder data (53);
- performing, based on jointly processing the obfuscated image (61) and the descriptor (70), a replacement of the placeholder data (53) of the obfuscated image (61) with artificial facial image data (110) corresponding to the descriptor (70) to produce an anonymized image (62).

10. Method according to claim 9, comprising capturing metadata (52) including non-image data captured in the context of capturing the image data (60) and associated with the image data (60).

11. Method according to any one of the claims 9 to 10, comprising storing the descriptor (70) and the obfuscated image (61) in a storage (21).

12. Method according to claim 11, comprising retrieving the descriptor (70) from the storage (21) and providing the information or a part of the information of the descriptor (70) and/or the obfuscated image (61) to a user (32).

13. Method according to any one of claims 9 to 12, comprising sending the anonymized image (61) to a third device (30) configured to display the anonymized image (62) to a user (32).

14. Use of a personal data processing system (1) according to any one of claims 1 to 8 in a data analysis system and/or a communication system.
